# EUROPEAN PATENT APPLICATION

(11) **EP 1 447 010 A1**
(43) Date of publication of application: **18.08.2004**
(21) Application number: 02803534.3
(22) Date of filing: 19.11.2002
(51) Int. Cl.: A23L 1/01, A47J 37/12

(54) **FRYING METHOD**

(30) Priority: 20.11.2001 JP 2001355231
(71) Applicant: The Nisshin OilliO, Ltd., Tokyo 104-8285 (JP)
(72) Inventor: NISHIDA, Minoru, Yokosuka-shi, Kanagawa 239-0841 (JP); OKUMURA, Akira, Minami-ku, Yokohama-shi, Kanagawa 232-00 (JP); INUI, Toshiyuki, Ebina-shi, Kanagawa 243-0411 (JP)
(74) Representative: Luderschmidt, Schüler & Partner GbR
(86) International application number: PCT/JP2002/012074
(87) International publication number: WO 2003/043442

(57) **Abstract**

A frying ingredient is fried under the state that bubbles are contained in at least a region of the frying oil layer during the fry cooking stage.

## Description

### Technical Field

The present invention relates to a fry cooking method.

### Background Art

Fry cooking is a cooking method in which a frying ingredient without coating or a frying ingredient covered with a coating material such as breadcrumbs or flour is placed and heated in a frying oil heated to a high temperature (usually, 160 to 180°C).

In the case of a frozen food, food having an appreciable thickness and food having a thick coating such as a croquette, a pork cutlet or fried food covered with a bread crumb coating, it was difficult in the past to elevate the temperature inside the frying ingredient in a short time, leading to a long frying time. Particularly, it is difficult to elevate the temperature in the central region of the frying ingredient in a short time. If the temperature inside the frying ingredient is not elevated sufficiently, a problem is generated in terms of the taste of the fried food. In addition, a sanitary problem is generated.

If the fry cooking is performed by elevating the temperature of the frying oil to a high temperature, (e.g., to about 200°C), in an attempt to elevate the temperature of the frying ingredient in a shorter time, the surface region alone of the frying ingredient is excessively heated, resulting in, for example, scorching, which impairs the outer appearance of the fried food. In addition, the taste of the fried food is impaired. Also, if the temperature of the frying oil is elevated, the deterioration of the frying oil is promoted. As a result, the flavor or the like of the fried food is adversely affected. Also, the smoke generation and the odor generation are increased, which aggravates the working environment. Further, the amount of wasted frying oil is increased, which gives rise to detrimental effects in respect of the environment and processing costs.

An object of the present invention is to provide a fry cooking method that permits uniformly cooking the frying ingredients in a short time and also permits suppressing the deterioration of the frying oil used.

### Disclosure of Invention

As a result of extensive research, the present inventors have found that, if the frying oil layer contains bubbles, a bubbling state is formed during the fry cooking stage, with the result that the frying oil layer is stirred so as to make it possible to fry the frying ingredient efficiently, and that the bubbling state noted above is effective for suppressing the deterioration of the frying oil, arriving at the present invention.

According to the present invention, there is provided a fry cooking method, characterized in that a frying ingredient is fried under the state that bubbles are contained in at least a region of the frying oil layer during the fry cooking stage. In the present invention, it is desirable for a bubbling state to be formed by the gas in at least 50% by volume of the frying oil layer. Also, it is desirable for the frying oil layer to have a bubble content of at least 2%. Further, it is desirable for the specific gravity of the frying oil layer to be not larger than 0.80.

In the present invention, it is desirable for the loading rate of the frying ingredient to fall within a range of between 10% and 35% and for the entire frying ingredient to be put below the upper surface of the frying oil layer. It is also desirable for the fry cooking to be carried out in the frying oil layer under the condition that the value of HA/SA^{1/2}, where SA denotes the surface area of the frying oil layer and HA denotes the height from the bottom to the upper surface of the frying oil layer, falls within a range of between 0.6 and 3.5. It is desirable for the frying ingredient to contain at least 30 mass % of water. Regarding a flat frying ingredient, it is desirable for the frying ingredient to be positioned during the fry cooking stage such that the plane including the large flat surface of the frying ingredient makes an angle with the surface of the frying oil layer. It is more desirable for the flat frying ingredient to be disposed during the fry cooking stage on a carrier such that the large flat surface of the frying ingredient makes an angle with the frying oil surface.

In the present invention, it is also possible to blow a gas into the frying oil layer so as to maintain a bubbling state in the frying oil layer. It is desirable to use one or a plurality of gass selected from the group consisting of an inert gas, a nitrogen gas and a carbon dioxide gas. It is more desirable to use a water vapor as the gas. Further, it is particularly desirable to blow a heated gas into the frying oil layer.

### Brief Description of the Drawing

FIGS. 1A and 1B collectively exemplify the construction of a fry cooking apparatus for working the present invention by blowing a gas;
FIGS. 2A and 2B collectively exemplify the construction of a frying ingredient carrier that can be used for cooking by frying the ingredient under the state that the frying ingredient is held upright;
FIGS. 3A and 3B collectively exemplify the construction of another fry cooking apparatus for working the present invention by blowing a gas; and
FIG. 4 is a graph showing the temperatures in the central regions of croquettes cooked by the method of the present invention.

### Best Mode for Carrying Out the Invention

The present invention provides a fry cooking method, characterized in that, in frying an ingredient, a bubbling state is formed in the frying oil layer during the fry cooking stage. To be more specific, the present invention provides a fry cooking method, characterized in that the cooking by frying is carried out under the state that the frying oil layer is bubbled by a gas such as a water vapor generated from the frying ingredient or blown from the outside into the frying oil layer. In the frying oil layer under the bubbling state specified in the present invention, the fats and oils forming the frying oil are vigorously stirred. As a result, the temperature within the frying oil vessel is rendered uniform regardless of the site within the frying oil vessel. It follows that it is possible to obtain the effect that, since the frying oil having a uniform temperature is efficiently brought into contact with the frying ingredient, the fry cooking can be finished in a short time. Further, the fat and oil forming the frying oil are brought into contact efficiently with the heating source in the fry cooking stage, and the contact time with the heating source is short so as to prevent the fat and oil from being overheated. It follows that it is possible to obtain the effect of suppressing the deterioration of the fat and oil forming the frying oil.

The frying oil layer zone containing the bubbling gas and put in a bubbling state provides a suitable frying zone. The frying zone has a substantially uniform temperature and the fry cooking is actually performed within the frying zone. In the present invention, a large frying zone is provided during the fry cooking stage. For example, the frying zone containing the bubbling gas and put in a bubbling state is formed in 50 to 100%, preferably 60 to 100%, more preferably 70 to 100%, furthermore preferably 80 to 99.99%, and most preferably 95 to 99.9%, of the entire volume of the frying oil layer. The state that the gaseous bubbling material is contained in at least 50% of the frying oil layer denotes that the bubbling material is contained in the upper portion relative to the central portion in the height direction of the frying oil layer and the particular portion is put in a bubbling state. Likewise, the state that the gaseous bubbling material is contained in at least 70% of the frying oil layer denotes that the gaseous bubbling material is contained in the frying oil layer except the lower region, which is less than 30% of the frying oil layer, in the depth direction of the frying oil layer. It is impossible to obtain the particular effect of the present invention even if the surface region alone of the frying oil layer is put in a bubbling state. If the frying zone, i.e., the frying oil zone that is put in a bubbling state, is excessively small, it is impossible for the stirring of the fat and oil forming the frying oil to produce a suitable heat exchange effect among the heating source, the fat and oil forming the frying oil, and the frying ingredient. Also, since the particular effect described above cannot be obtained in a region excessively away from the heating source, it is desirable for the heating source to be included in or to be positioned relatively close to the frying oil layer that is put in a bubbling state.

Since the frying oil has a uniform temperature within the frying zone and the heat efficiency is high within the frying zone, the fry cooking can be performed satisfactorily within the frying zone in a short time. In other words, in the fry cooking method of the present invention, the frying zone can be controlled. Also, the fry cooking having a very large frying zone can be performed in the fry cooking method of the present invention. The frying zone put in a bubbling state can be controlled depending on the disposing method of the frying ingredient and on the blowing position of the gas such as a water vapor. As a matter of fact, the frying zone can be formed in the entire frying oil layer.

Concerning the bubble content of the bubbling frying zone, it is desirable for the bubbling frying zone to contain 2 to 30%, preferably 3 to 30%, and more preferably 4 to 30%, of bubbles because the effect of the present invention can be suitably obtained in this case by, for example, the stirring effect of the frying oil layer.

The bubble content referred to above denotes the ratio (volume ratio) of the bubbles based on the entire frying oil layer containing the bubbles. In practice, the amount of the bubbles generated in, for example, one minute is observed, and the average value thereof is regarded as the bubble content. Also, the bubble content can be determined by observing the elevation rate of the surface level of the frying oil layer. To be more specific, the bubble content can be calculated on the basis of the elevated height of the surface level of the frying oil layer caused by the presence of the bubbles in the frying oil layer relative to the surface level of the frying oil layer at the time when the bubbles are not present in the frying oil layer. If the bubble content is not higher than 2%, it is impossible to achieve a suitable bubbling. By contrast, it is undesirable for the bubble content to exceed 30% because, if the bubble content exceeds 30%, the bubbling is performed excessively vigorously, which gives rise to problems. For example, the coating of the frying ingredient is peeled off, the frying oil is repelled from the frying oil layer, and the frying oil is caused to overflow from the frying oil vessel.

Further, it is desirable for the specific gravity of the frying oil layer to be not larger than 0.80, preferably not larger than 0.79, and more preferably not larger than 0.78. If the frying oil layer has this specific gravity, the frying oil layer is capable of containing a prescribed amount of bubbles so as to carry out the desired bubbling suitably. In addition, if the frying oil layer has a small specific gravity, it is possible for the frying ingredient to be immersed in the frying oil layer. The specific gravity of that portion of the frying oil layer which contains bubbles can be calculated on the basis of, for example, the elevation rate of the surface level of the frying oil layer or the volume of the frying ingredient.

As described above, the fry cooking method of the present invention is featured in that the frying oil layer has a large frying zone. In order to utilize the particular feature, it is desirable to carry out the fry cooking with the frying ingredient immersed in the frying oil layer. It is possible to immerse forcedly the frying ingredient in the frying oil layer by using, for example, a frying ingredient carrier. It is also possible to decrease the specific gravity of the frying oil layer so as to permit the frying ingredient to be moved downward in the frying oil layer.

It should also be noted that, even where the frying ingredient is positioned in the vicinity of the surface level of the frying oil layer, the upper surface of the frying ingredient is frequently brought into contact with the frying oil because the frying oil layer is bubbled. In the case of the fry cooking ordinary tempura, etc., the frying ingredient floats on the surface of the frying oil layer. As a result, only one surface alone of the frying ingredient is cooked so as to give rise to problems both in the cooking time and the quality of the cooked ingredient. In general fry cooking methods, bubbles stay on the lower surface of the frying ingredient floating on the surface of the frying oil layer, which is not desirable in carrying out the fry cooking. However, if the specific gravity of the frying oil is somewhat decreased, the frying ingredient is somewhat moved downward in the frying oil layer so as to permit the both surfaces of the frying ingredient to be cooked. In addition, the bubbling effect prevents bubbles from remaining on the lower surface of the frying ingredient.

According to the fry cooking method of the present invention, the frying oil layer is stirred by the bubbling effect so as to promote convection mixing. As a result, the frying ingredient is efficiently heated so as to make it possible to cook the frying ingredient in a short time. For example, the temperature in the central portion of the frying ingredient can be elevated in a short time. Even in this case, the coating of the frying ingredient is not scorched because the frying oil need not be heated to a particularly high temperature. Also, since the frying oil layer has a uniform temperature, it is possible to obtain a cooked food of a high quality both in the outer appearance and the taste.

Further, the bubbling permits improving the contact efficiency with the heating source and the heat efficiency relative to the frying oil. Also, the convection of the frying oil promoted by the bubbling permits suppressing the overheating of the frying oil caused by the heating source so as to produce the effect of suppressing the deterioration of the frying oil. In addition, since the heat efficiency of the heating source relative to the frying oil is high, the temperature itself of the heating source need not be set at an unreasonably high level, which further suppresses the deterioration of the frying oil. In this case, it is desirable for the contact area of the frying oil with the heating source to be large. For example, it is desirable to use a heating source for heating the side surface of the frying oil vessel.

As described above, the frying oil layer has a large frying zone in the fry cooking method of the present invention. It follows that a large amount of frying ingredients can be fried in a single frying operation. In other words, the fry cooking method of the present invention is excellent in the working efficiency and the frying cost.

In the fry cooking method of the present invention, it is desirable for the distance between the upper surface and the bottom of the frying oil layer used for the fry cooking to fall within a range of between 5 cm and 200 cm, preferably between 10 cm and 200 cm, more preferably between 10 cm and 100 cm, and furthermore preferably between 10 cm and 40 cm. On the other hand, it is desirable for the surface area (SA) of the frying oil layer to fall within a range of between 30 cm² and 30,000 cm², preferably between 30 cm² and 3,000 cm², and more preferably between 30 cm² and 1,000 cm². The fry cooking apparatus used for the fry cooking comprises a frying oil vessel that permits providing the frying oil layer of such a shape when a frying oil is supplied thereinto. It is possible for the frying oil vessel to be shaped cubic or cylindrical.

The term "fry cooking" represents the cooking method under heat such as frying, frying without coating, tempura frying, and coated frying, which utilizes a relatively large amount of fat/oil forming the frying oil as a heating medium. The kind and the shape of the frying ingredient is not particularly limited in the fry cooking method of the present invention.

The ingredients subjected to the fry cooking in the present invention include, for example, croquettes, pork cutlets, fried meat cakes, fried fish and shellfish, fried pork and meat, fried vegetables, fried oysters, tempura, fried ham cutlets, fried potatoes, fried meat dumplings, pre-fried type tempura, fried rice cake, such as a fried rice cracker, fried snacks, fried bean curd, fried fish balls, American dogs, curried bread, piroshki, and harumaki. Particularly, the suitable flat frying ingredients include, for example, croquettes, pork cutlets, fried meat cakes, fried ham cutlets, and fried fish.

In working the fry cooking method of the present invention, it is desirable to set the loading rate of the frying ingredient to fall within a range of between 10% and 35%, preferably between 12% and 30%, and more desirably between 15% and 25%, and the frying ingredient should be disposed to allow the large upper surface of the frying ingredient to be positioned below the upper surface of the frying oil layer. In this case, that portion of the frying oil layer which is positioned above the lower portion of the frying ingredient contains bubbles generated by, for example, the water vapor generated from the frying ingredient itself so as to form a bubbling state. It is undesirable for the loading rate of the frying ingredient to be lower than 10% because a satisfactory bubbling state is not formed in this case. It is also undesirable for the loading rate of the frying ingredient to exceed 35% because an inconvenience is generated in the fry cooking itself by, for example, a marked reduction of the frying oil temperature.

The loading rate R(%) of the frying ingredient is represented by R(%) = A/(A + B) × 100 (%), where A denotes the total volume of the frying ingredient loaded in the frying oil layer in the cooking stage, and B denotes the volume of the frying oil layer.

In the present invention, the frying ingredient is positioned below the upper surface of the frying oil layer in the fry cooking stage. In other words, the fry cooking method of the present invention excludes the fry cooking that is carried out by allowing the frying ingredient to float on the frying oil layer. Of course, the present invention covers the case where the frying ingredient is completely fixed within the frying oil layer in the fry cooking stage, and the case where the frying ingredient is positioned substantially within the frying oil layer during the fry cooking stage. In addition, the present invention also covers the case where it can be recognized that the fry cooking is not performed by allowing the frying ingredient to float on the frying oil layer such that the fry cooking is performed below the upper surface of the frying oil layer as a whole, though the frying ingredient is partly positioned on the upper surface of the frying oil layer in the fry cooking stage.

It should also be noted that, even if the loading rate of the frying ingredient is high, bubbling is unlikely to take place in the case where the frying oil layer has an unreasonably large surface area and has a small depth. Naturally, in working the fry cooking method of the present invention, it is desirable for the frying oil layer to have a small surface area and a large depth. Further, it is necessary for the surface area and the depth of the frying oil layer to be determined not to give detrimental effects to the fry cooking operation.

In the fry cooking method of the present invention, the fry cooking is carried out in the frying oil layer under the condition that the value of HA/SA^{1/2}, where SA denotes the surface area of the frying oil layer and HA denotes the height from the bottom to the upper surface of the frying oil layer, falls within a range of between 0.6 and 3.5, preferably between 0.65 and 3.0, and more preferably between 0.7 and 2.7. It is desirable for the fry cooking to be carried out under the condition given above because it is possible to ensure a suitable bubbling state and a satisfactory frying operability.

Where the bubbling is performed by utilizing the gas generated from the frying ingredient itself, the properties of the frying ingredient also affect the frying operation. For example, the water content of the frying ingredient affects the frying operation. It is desirable for the water content of the frying ingredient to be not lower than 30 mass %, preferably not lower than 50 mass %, and more preferably not lower than 60 mass %. Where the frying ingredient contains a suitable amount of water, a suitable bubbling state is formed in the frying oil layer by, for example, the water vapor generated from the frying ingredient during the fry cooking operation.

The shape of the frying ingredient is not particularly limited in the fry cooking method of the present invention. However, it is desirable for the frying ingredient to be shaped flat similar, for example, to a croquette or a pork cutlet. When it comes to the flat frying ingredient, it is possible to perform the fry cooking by disposing the frying ingredient such that a flat surface of the frying ingredient makes an angle with the upper surface of the frying oil layer. The particular manner of disposing a flat frying ingredient during the fry cooking stage is desirable because the fry cooking can be performed while preventing bubbles from remaining below the frying ingredient, and the convection of the frying oil is effectively carried out over the entire region of the frying oil layer. It is possible to dispose the flat frying ingredient such that a large flat surface of the frying ingredient makes an angle with the upper surface of the frying oil layer. It is desirable for the angle made between the large flat surface of the frying ingredient and the upper surface of the frying oil layer to fall within a range of between 45° and 135°, preferably between 60° and 120°, more preferably between 70° and 110°, and particularly desirably between 75° and 105°. Also, the fry cooking can be suitably carried out by disposing the frying ingredient on a frying ingredient carrier such that the large flat surface of the frying ingredient makes an angle with the upper surface of the frying oil layer. In general fry cooking, the frying ingredient is allowed to float on the frying oil layer during the fry cooking operation. In other words, a large surface of the flat frying ingredient is held parallel to the upper surface of the frying oil layer and, thus, the angle made between the large surface of the flat frying ingredient and the upper surface of the frying oil layer is maintained at about 180°.

In the fry cooking method of the present invention, it is desirable to carry out the fry cooking by arranging a frying ingredient carrier below the upper surface of the frying oil layer and by disposing the flat frying ingredient such that the large surface of the flat frying ingredient makes an angle with the upper surface of the frying oil layer, as described above.

It should be noted in particular that the fry cooking is performed in general by allowing the flat frying ingredient to float on the upper surface of the frying oil layer, with the result that the loading rate of the frying ingredient is low, and a bubbling state is not formed during the fry cooking stage. Such being the situation, it is desirable to employ the fry cooking method of the present invention described above because the frying ingredient can be fried under a bubbling state.

The present invention also provides a fry cooking method characterized in that a gas is blown into the frying oil layer during the fry cooking stage, particularly, a fry cooking method characterized in that the gas is blown into the frying oil layer such that the blown gas forms fine bubbles.

In the present invention, the bubbling is formed in the frying oil layer by the gas generated from the frying ingredient itself. In addition, a bubbling state can be formed in the frying oil layer by forcedly blowing a gas into the frying oil layer, preferably, by blowing the gas in a manner to form fine bubbles in the frying oil layer. The gas can be blown into the frying oil layer through a single blowing point or a plurality of blowing points. Also, the bubble size can be controlled at the blowing port of the gas. For example, it is possible to form fine bubbles by arranging a porous cover in the blowing port of the gas. It is also possible to control the bubble size by controlling the number of blowing ports of the gas. For example, fine bubbles can be formed by arranging a large number of small blowing ports for blowing the gas.

The site at which the blowing port of the gas is formed is not particularly limited. It is possible to form the gas blowing port at the bottom or in an intermediate portion of the frying oil vessel. The frying oil layer zone that is bubbled, i.e., the frying zone, can be controlled by suitably selecting the site at which the gas blowing port is formed.

The gas that is blown into the frying oil layer is not particularly limited. However, it is desirable to blow a gas, which is not combustible and which can be legally used for food processing, into the frying oil layer. It is more desirable to blow an inert gas such as a nitrogen gas, a carbon dioxide gas or a water vapor into the frying oil layer.

It is also desirable to blow a water vapor into the frying oil layer. In this case, water vapor can also be blown into the frying oil layer in an attempt to control the quality of the fry cooked food by removing, for example, the odor of the fat and oil itself forming the frying oil layer.

It is desirable to blow a heated gas into the frying oil layer in view of the frying operation including the control of the frying oil temperature and the quality of the fried food. It is desirable for the temperature of the heated gas to fall within a range of between 150°C and 300°C, preferably between 160°C and 280°C, and more preferably between 170°C and 250°C. The blowing of the heated gas is also desirable because the change in temperature of the frying oil layer caused by the frying ingredient disposed in the frying oil layer can be controlled by the temperature of the heated gas blown into the frying oil layer.

It is desirable to blow the gas into the frying oil layer at a blowing rate of 20 to 3,000 mL/sec, preferably at a blowing rate of 25 to 2,500 mL/sec, and more preferably at a blowing rate of 30 to 2,000 mL/sec based on one liter of the frying oil. Particularly, the blowing amount of the gas can be decreased with increase in the difference in temperature between the gas blown into the frying oil layer and the frying oil layer. For example, in the case of blowing a nitrogen gas into the frying oil layer, it suffices to blow the nitrogen gas at the blowing rate of about 26 mL/sec when the temperature of the frying oil layer is 180°C, though it is necessary to blow the nitrogen gas at the blowing rate of 40 mL/sec when the temperature of the frying oil layer is 20°C.

In the present invention, it is desirable to control the flow velocity of the frying oil in the vicinity of the frying ingredient and in the vicinity of the heating source for heating the frying oil, the heating source being housed desirably in the side wall of the frying oil vessel, by controlling the presence of the bubbling state. To be more specific, it is desirable to set the flow velocity of the frying oil in the vicinity of the frying ingredient at 2 to 100 cm/sec, preferably at 5 to 90 cm/sec, more preferably at 7.5 to 80 cm/sec, and particularly preferably at 10 to 70 cm/sec. On the other hand, it is desirable to set the flow velocity of the frying oil in the vicinity of the heating source at 1 to 100 cm/sec, preferably at 2 to 90 cm/sec, more preferably at 3 to 80 cm/sec, and particularly preferably at 5 to 70 cm/sec. The flow velocity of the frying oil can be controlled by controlling, for example, the loading rate of the frying ingredient, the water content of the frying ingredient, and the velocity of the gas blown into the frying oil layer.

Also, in the present invention, it is desirable to achieve convection mixing of the frying oil such that the frying oil having the temperature lowered by the heat exchange with the frying ingredient achieved in the peripheral portion of the frying ingredient flows smoothly from the surface region of the frying oil layer toward the heating source at the side wall of the frying oil vessel, and the frying oil that is heated again flows smoothly toward the center of the frying oil vessel so as to re-contact the frying ingredient. For example, it is desirable for the frying oil positioned between the adjacent frying ingredient pieces to flow along the stream formed by the bubble so as to reach the upper surface of the frying oil layer and, then, to flow downward along the side wall of the frying oil vessel constituting the heating section. Further, the frying oil heated by the heating section is allowed to flow toward the central portion of the frying oil layer so as to re-contact the frying ingredient. The particular convection mixing of the frying oil can be achieved by the following manners. For example, the number of gas blowing ports provided through the bottom plate of the frying oil vessel can be made large in the central portion of the bottom plate and can be decreased toward the sidewall of the frying oil vessel. Alternatively, the size of the blowing port can be made large in the central portion of the bottom plate and can be diminished toward the sidewall of the frying oil vessel. Where the convection mixing of the frying oil is generated in the particular mode described above, bubbles can be rapidly moved away from the surface of the frying ingredient so as to perform the fry cooking more suitably. Also, it is desirable to set the velocity of the convection in a manner to set up a slight negative pressure between the adjacent frying ingredient pieces. Since the particular negative pressure permits further generating the gas from the frying ingredient so as to cause the excess water to be evaporated from the frying ingredient, the fry cooking can be performed more suitably. Incidentally, in the fry cooking method of the present invention, it is desirable to mount the heating source in that position within the sidewall of the frying oil vessel which corresponds to the frying ingredient present within the frying oil layer.

In the present invention, the particular effect described above can be obtained by performing the fry cooking with the frying ingredient immersed in the frying oil. Since the frying ingredient is heated within the frying oil, that portion of the frying oil which is moved to reach the upper surface of the frying oil layer by the convection has a lower temperature. In the conventional fry cooking apparatus and the conventional fry cooking method, the upper surface of the frying oil layer has the highest temperature and, thus, tends to be deteriorated. However, the fry cooking method of the present invention permits producing the effect of suppressing the deterioration of the frying oil.

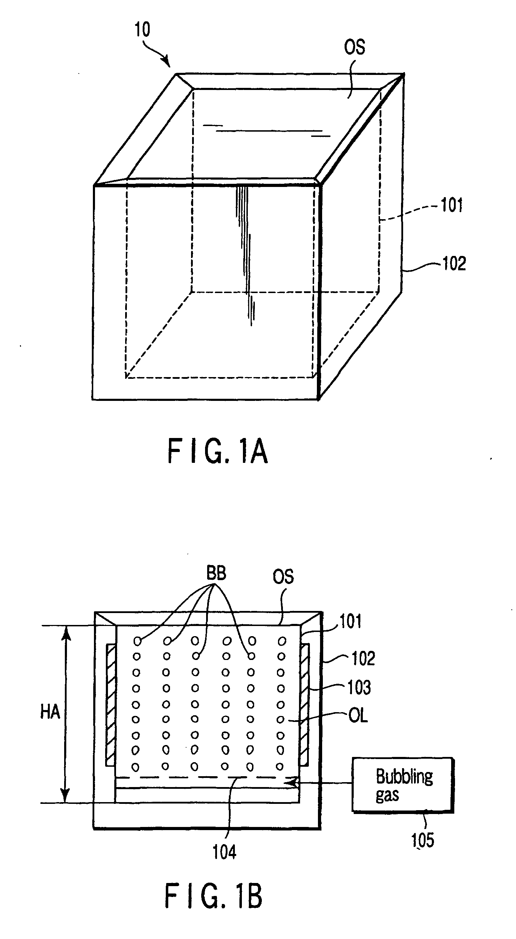

FIG. 1A is an oblique view schematically showing as an example the construction of a fry cooking apparatus 10 for working the fry cooking method of the present invention by blowing a gas into the frying oil layer, and FIG. 1B is a vertical cross sectional view of the fry cooking apparatus 10 shown in FIG. 1A. As shown in FIGS. 1A and 1B, the fry cooking apparatus 10 comprises an oblong cylindrical frying oil vessel 101 having a bottom. The frying oil vessel 101 shown in FIGS. 1A and 1B has a substantially parallelepiped configuration defined by four side walls and a single bottom wall. The frying oil vessel 101 is surrounded by a case 102 such that a prescribed distance is provided therebetween. As shown in FIG. 1B, the outer surfaces of the side walls of the frying oil vessel 101 are surrounded by a heater unit 103 for heating the frying oil OL loaded in the frying oil vessel 101. A gas blowing pipe 104 provided with a large number of through-holes that are positioned to face upward is arranged zigzag on, for example, the same plane in the vicinity of the bottom portion of the frying oil vessel 101. A bubbling gas is supplied from a bubbling gas source 105 into the gas blowing pipe 104. The bubbling gas, which is blown through the large number of the through-holes of the gas blowing pipe 104 into the frying oil OL, forms a bubble BB within the frying oil OL, and the bubble BB thus formed is moved upward. The letters HA shown in FIG. 1B denote the distance (height) between the oil surface OS and the bottom of the frying oil vessel 101. Incidentally, it is possible to form a large number of gas blowing ports in the bottom plate of the frying oil vessel for blowing therethrough the gas into the frying oil OL in place of arranging the gas blowing pipe 104.

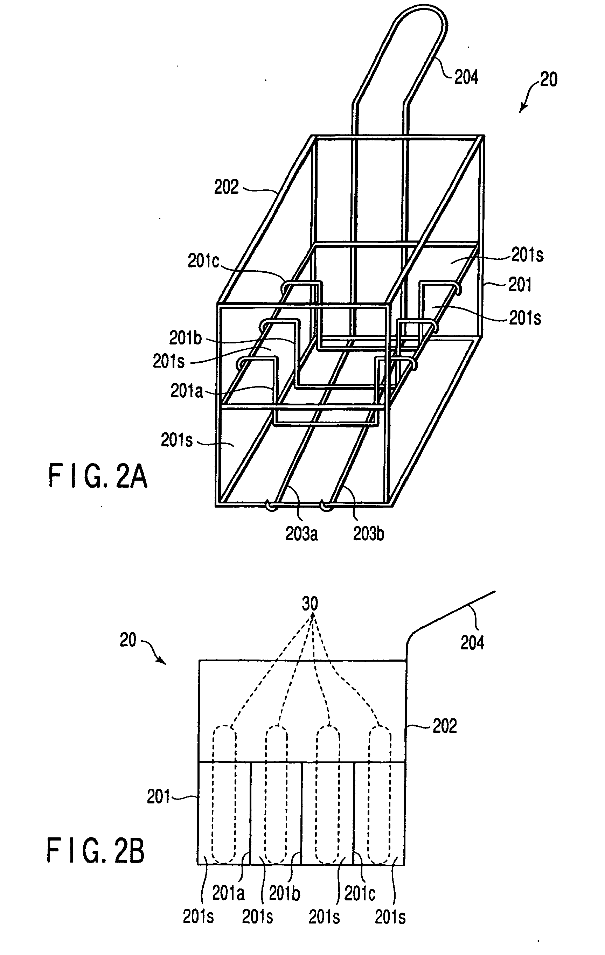

FIG. 2A is an oblique view schematically showing as an example the construction of an ingredient.carrier 20 that can be used for performing the fry cooking under the state that the frying ingredient is held upright, and FIG. 2B is a side view schematically showing the state that the frying ingredient is held by the ingredient carrier 20 shown in FIG. 2A. The carrier 20 shown in FIGS. 2A and 2B is in the shape of a case as a whole. To be more specific, the carrier 20 comprises a lower frame 201 formed in the shape of a cube by a rod-like member such as a metal wire, and an upper frame 202 positioned on the lower frame 201. The upper frame 202 is also formed substantially in the shape of a cube by a rod-like member such as a metal wire. The free space within the lower frame 201 is partitioned by a plurality of partitioning rods 201a to 201c each formed in a substantially concave shape into a plurality of small sections 201s, i.e., into four small sections 201s in this case. Needless to say, the concave partitioning rod is supported in its horizontal bottom portion by the lower frame 201. Two rod-like members 203a and 203b are arranged to extend in the horizontal direction along the bottom of the lower frame 201 so as to support the frying ingredient housed in each of the small sections 201s from the lower side. These rod-like members 203a and 203b are folded at the side section of the carrier 20 so as to extend upright along the lower frame 201 and the upper frame 202, and are allowed to further extend obliquely upward and outward beyond the upper frame 202 so as to be combined, thereby forming a handle 204. The distance between the adjacent partitioning rods 201a to 201c and the distance between the partitioning rod 201a or 201c and the lower frame 201 are determined to permit the flat frying ingredient 30 such as a croquette, which is housed in the small section 201s, to be held such that the large flat surface of the flat frying ingredient 30 substantially makes an angle with the upper surface of the frying oil layer as described above. Incidentally, it is possible for the circumferential side surface and the bottom surface of the carrier 20 shown in FIG. 2 to be covered with a mesh or a metal net. In this case, the carrier 20 can be used as a basket and, thus, the ordinary frying ingredients other than the flat frying ingredient can also be put in the carrier 20 for the fry cooking. Also, it is possible to omit the upper frame 202.

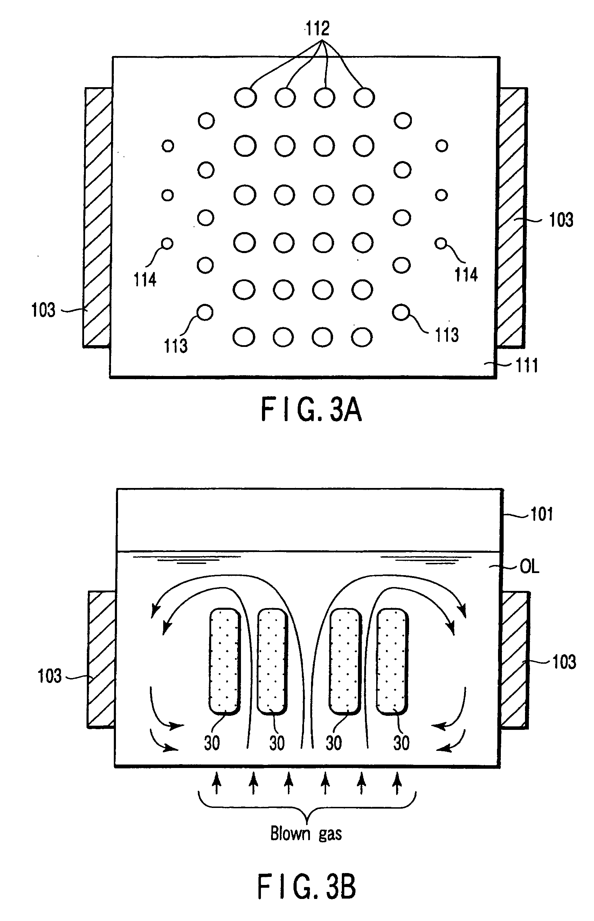

FIGS. 3A and 3B collectively show a fry cooking apparatus that permits suitably controlling the convection of the frying oil. In the fry cooking apparatus shown in FIGS. 3A and 3B, the gas blowing pipe 104 included in the fry cooking apparatus shown in FIG. 1 is replaced by a large number of gas blowing ports formed in a bottom plate 111 of the frying oil vessel such that a gas is blown from below the bottom plate 111 into the frying oil OL through the gas blowing ports formed in the bottom plate 111 during the fry cooking stage. As apparent from FIG. 3A showing a lateral cross section, a large number of large gas blowing ports 112 are formed in the central portion in the lateral direction of the frying oil vessel 101. Also, the number and the size of gas blowing ports 113 and 114 are gradually decreased toward the side walls of the frying oil vessel 101. If the fry cooking is performed by using the fry cooking apparatus of the particular construction, the convection of the frying oil can be efficiently formed, as denoted by arrows in FIG. 3B, such that the frying oil is moved upward to reach the upper surface of the frying oil layer along the stream of the bubble formed in the region between the adjacent frying ingredient pieces 30 and, then, flows downward along the side wall of the frying oil vessel having the heater 103 housed therein. Further, the frying oil flows toward the central portion of the frying oil vessel so as to re-contact the frying ingredient 30.

### Example 1

The use of a fryer manufactured on a trial basis for performing the fry cooking method of the present invention was compared with the use of a conventional fryer in respect of the temperature in the central region of a croquette after the fry cooking under the test conditions given below.

### TEST CONDITIONS:

### Fry Cooking Apparatus:

Fryer manufactured on trial basis:
Shape of frying oil vessel: 10 cm (width) × 18 cm (length) × 21 cm (height)
   Amount of frying oil: 2.0 liters
   Arrangement of frying ingredient: A croquette was fixed such that the large flat surface of the croquette was positioned perpendicular to the surface of the frying oil, and the croquette was completely immersed in the frying oil.

Conventional fryer (5L type electric fryer available on the market, Eishin Denki EF-5 type):
Shape of frying oil vessel: 25 cm (width) × 27 cm (length) × 13 cm (height)
   Amount of frying oil: 5.0 liters
   Arrangement of frying ingredient: The croquette was disposed such that the large flat surface of the croquette was positioned parallel to the frying oil surface, and the croquette was not particularly fixed (conventional frying method).

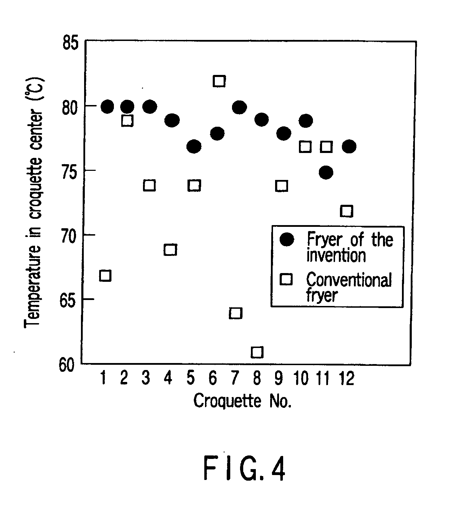

Frying oil temperature: The frying oil temperature at the time when the frying ingredient was not put in the frying oil was set at 180°C.
Frying ingredient: Commercial frozen croquettes (each weighing 75g) × 4
Frying time: 6 minutes
Temperature measurement: The temperature in the central region of each fried croquette was measured by a thermocouple type digital thermometer at the time when the fried croquette was left to stand for 6 minutes at room temperature. The experiment was repeated three times, and the temperature in the central region of the fried croquette was measured for 12 croquettes in total. FIG. 4 is a graph showing the results. The experimental data given in FIG. 4 are also shown in Table 1 below:

**Table 1:**

| Temperature in central region of fried croquette | | |
|---|---|---|
| | Fryer of the invention | Conventional fryer |
| Average temperature | 78.5°C | 72.5°C |
| Standard deviation | 1.6 | 6.2 |
| Lowest temperature | 75°C | 61°C |

As apparent from the experimental data given in FIG. 4 and Table 1, the temperature in the central region of the croquette fried by the fryer manufactured on the trial basis for working the fry cooking method of the present invention was higher than that for the croquette fried by the conventional fryer. Also, the croquettes fried by the fryer of the present invention were smaller in the nonuniformity of the temperature. In other words, the fryer of the present invention was found to be capable of frying the croquette uniformly in a short time.

Also, Table 2 shows the frying time required for the temperature in the central region of the frying ingredient to be elevated to reach about 80°C providing the criterion indicating the completion of the fry cooking.

**Table 2:**

| Frying time required for heating to desired temperature | | |
|---|---|---|
| | Fryer of the invention | Conventional fryer |
| 70°C | 4 min. and 54 sec. | 5 min. and 18 sec. |
| 75°C | 5 min. and 15 sec. | 5 min. and 44 sec. |
| 80°C | 5 min. and 37 sec. | 6 min. and 12 sec. |
| 85°C | 0 min. and 00 sec. | 6 min. and 45 sec. |

The experimental data given in Table 2 support that the present invention permits performing a fry cooking in a shorter time than that in the case of using the conventional fryer.

### Example 2

The use of a fryer manufactured on a trial basis for performing the fry cooking method of the present invention was compared with the use of the conventional fryer in respect of the state of the frying oil during the fry cooking stage, such as the ratio of bubbles and flow velocity and the state of the croquette after the fry cooking such as the outer appearance and the temperature in the central region under the test conditions given below.

### TEST CONDITIONS:

### Fry Cooking Apparatus:

<Fryer of present invention>
   Shape of frying oil vessel: 9 cm (width) × 16 cm (length) × 17 cm (height)
   Amount of frying oil: Addition of 1,500 mL of frying oil
   Heater: A heater was housed in the sidewalls on the left and right sides of the frying oil vessel so as not to be exposed to the inner space of the frying oil vessel.
   Arrangement of frying ingredient: A croquette was fixed such that the large flat surface of the croquette was positioned perpendicular to the surface of the frying oil, and the croquette was completely immersed in the frying oil.
<Conventional fryer> (Eishin Denki EF-3L type):
   Shape of frying oil vessel: 25 cm (width) × 27 cm (length) × 13 cm (height)
   Amount of frying oil: Addition of 3,000 mL of frying oil
   Heater: A heater was arranged in the center in the lower portion within the frying oil vessel.
   Arrangement of frying ingredient: The croquette was disposed such that the large flat surface of the croquette was positioned parallel to the frying oil surface, and the croquette was not particularly fixed (conventional frying method).
   Frying oil temperature: The frying oil temperature at the time when the frying ingredient was not put in the frying oil was set at 180°C.
   Frying ingredient: Commercial frozen croquettes (each weighing 75g) × 3
   Frying time: 6 minutes
   Measurement of bubble content: The bubble content was measured on the basis of the elevation rate of the upper surface of the frying oil layer.
   Measurement of convection velocity of frying oil: A solid material having a specific gravity substantially equal to that of the frying oil such as the frying scum was put in the frying oil, and the velocity of convection of the frying oil was determined by measuring the moving speed of the frying scum.
   Temperature measurement: The temperature in the central region of each fried croquette was measured by a thermocouple type digital thermometer at the time when the fried croquette was left to stand for 6 minutes at room temperature.

The experimental data are given in Tables 3 and 4.

**Table 3:**

| State of frying oil during fry cooking stage | | |
|---|---|---|
| | The invention | Prior art |
| Bubble content | 7.8 | 0.2 |
| Convection velocity of frying oil (in the vicinity of frying ingredient) (cm/sec) | 60 | No convection |
| Convection velocity of frying oil (in the vicinity of heater) (cm/sec) | 8 | 0.5 |

**Table 4:**

| Quality of fried croquette | | |
|---|---|---|
| | The invention | Prior art |
| Central temperature (average of 3 croquettes) | 85°C | 79°C |
| Outer appearance | Good; substantially free from nonuniform frying | Large difference in fried color between back surface and front surface |

As apparent from the experimental data given in Table 3, a bubble is suitably contained in the frying oil layer in the fry cooking method of the present invention so as to bring about the convection of the frying oil. As a result, the frying oil does not stay in the vicinity of the heating source and the frying ingredient and, thus, the fry cooking can be carried out suitably. On the other hand, it has been found that, in the conventional fry cooking method, the frying oil stays on the lower surface of the frying ingredient floating on the surface of the frying oil layer.

Also, as apparent from the experimental data given in Table 4, the temperature in the central region of the frying ingredient after the fry cooking is higher in the present invention that that in the prior art. This clearly supports that the frying ingredient is suitably cooked in the fry cooking method of the present invention. It has also been clarified that the fry cooking method of the present invention permits suppressing the nonuniform fry cooking so as to obtain a suitable fry cooked food of a high quality.

As described above, the present invention provides a fry cooking method which permits uniformly cooking a frying ingredient in a short time and which also permits suppressing the deterioration of the frying oil used. The present invention also permits producing an economic advantage and a desirable environmental effect that the working time can be shortened and that the amount of the waste frying oil can be decreased.

## Claims

1. A fry cooking method, **characterized in that** a frying ingredient is fried under the state that bubbles are contained in at least a region of the frying oil layer during the fry cooking stage.

2. The fry cooking method according to claim 1, wherein bubbles are contained in at least 50% by volume of the frying oil layer, and a bubbling state is formed in that region of the frying oil layer which contains the bubbles.

3. The fry cooking method according to claim 1, **characterized in that** the bubble-containing region of the frying oil layer has at least 2% by volume of the bubble content.

4. The fry cooking method according to claim 1, **characterized in that** the frying oil has a specific gravity not larger than 0.80.

5. The fry cooking method according to claim 1, **characterized in that** the loading rate of the frying ingredient falls within a range of between 10% and 35%, and the frying ingredient is disposed below the upper surface of the frying oil layer.

6. A fry cooking method, **characterized in that** a frying ingredient is fried under the state that bubbles are contained in at least a region of the frying oil layer during the fry cooking stage, bubbles are contained in at least 50% by volume of the frying oil layer, a bubbling state is formed **in that** region of the frying oil layer which contains the bubbles, the bubble-containing region of the frying oil layer has at least 2% by volume of the bubble content, the frying oil has a specific gravity not larger than 0.80, and the loading rate of the frying ingredient falls within a range of between 10% and 35% and the frying ingredient is disposed below the upper surface of the frying oil layer.

7. The fry cooking method according to claim 5, **characterized in that** the fry cooking is carried out in the frying oil layer under the condition that the value of HA/SA^{1/2}, where SA denotes the surface area of the frying oil layer and HA denotes the height from the bottom to the upper surface of the frying oil layer, falls within a range of between 0.6 and 3.5.

8. The fry cooking method according to claim 6, **characterized in that** the fry cooking is carried out in the frying oil layer under the condition that the value of HA/SA^{1/2}, where SA denotes the surface area of the frying oil layer and HA denotes the height from the bottom to the upper surface of the frying oil layer, falls within a range of between 0.6 and 3.5.

9. The fry cooking method according to claim 5, **characterized in that** the fry cooking is carried out by disposing a flat frying ingredient such that the large flat surface of the frying ingredient makes an angle with the upper surface of the frying oil layer.

10. The fry cooking method according to claim 9, **characterized in that** the fry cooking is carried out by disposing a flat frying ingredient on a carrier such that the large flat surface of the frying ingredient makes an angle with the upper surface of the frying oil layer.

11. The fry cooking method according to claim 1, **characterized in that** the bubbling state of the frying oil layer is maintained by blowing a gas into the frying oil layer.

12. The fry cooking method according to claim 11, **characterized in that** the gas is blown into the frying oil layer in a manner to form fine bubbles within the frying oil layer.

13. The fry cooking method according to claim 11, **characterized in that** a single kind or a plurality of different kinds of gases selected from the group consisting of an inert gas, a nitrogen gas, a water vapor and a carbon dioxide gas are used as the gas blown into the frying oil layer.

14. The fry cooking method according to claim 13, **characterized in that** a water vapor is used as the gas blown into the frying oil layer.

15. The fry cooking method according to claim 11, **characterized in that** the gas is blown under a heated state into the frying oil layer.

16. The fry cooking method according to claim 1, **characterized in that** the distance between the upper surface and the bottom of the frying oil layer falls within a range of between 5 cm and 200 cm.

17. The fry cooking method according to claim 1, **characterized in that** the frying oil layer has a surface area falling within a range of between 30 cm2 and 30,000 cm².

18. The fry cooking method according to claim 1, **characterized in that** the frying oil flows at a speed of 2 to 100 cm/sec in the vicinity of the frying ingredient.

19. The fry cooking method according to claim 1, **characterized in that** the frying oil flows at a speed of 1 to 100 cm/sec in the vicinity of the heating source for heating the frying oil vessel.
